# EUROPÄISCHE PATENTSCHRIFT

(11) **EP 3 180 484 B1**
(45) Veröffentlichungstag und Bekanntmachung des Hinweises auf die Patenterteilung: **27.06.2018**
(21) Anmeldenummer: 15744221.1
(22) Anmeldetag: 30.07.2015
(51) Int. Cl.: E04G 21/04

(54) **VERTEILERMAST FÜR STATIONÄRE ODER FAHRBARE DICKSTOFFPUMPEN**
DISTRIBUTION BOOM FOR STATIONARY OR MOBILE VISCOUS MATERIAL PUMPS
MÂT DISTRIBUTEUR POUR POMPES À LIQUIDES ÉPAIS FIXES OU MOBILES

(30) Priorität: 12.08.2014 DE 102014215947
(43) Veröffentlichungstag der Anmeldung: 21.06.2017
(73) Patentinhaber: Putzmeister Engineering GmbH, 72631 Aichtal (DE)
(72) Erfinder: RAU, Benjamin, 70771 Leinfelden-Echterdingen (DE); DAUM, Eva, 70794 Filderstadt (DE); FÜGEL, Dietmar, 72649 Wolfschlugen (DE)
(74) Vertreter: Pfiz, Thomas
(86) Internationale Anmeldenummer: PCT/EP2015/067473
(87) Internationale Veröffentlichungsnummer: WO 2016/023758

(56) Entgegenhaltungen:
- EP-A1- 0 838 563
- CN-U- 203 113 801
- DE-A1- 19 827 010
- JP-A- S55 155 866
- US-A- 4 034 876

## Beschreibung

Die Erfindung betrifft einen Verteilermast für stationäre oder fahrbare Dickstoffpumpen gemäß dem Oberbegriff des Anspruchs 1 und ein Verfahren zur Herstellung eines solchen Verteilermasts gemäß dem Oberbegriff des Anspruchs 13. Ein Betonverteilermast für stationäre und mobile Betonpumpen dieser Art ist bekannt (vgl. DE-10 2012 213 729 A1). Die Mastarme sind dort vor allem aus Gewichstgründen als Kastenprofil ausgebildet. An einem solchen Verteilermast ist regelmäßig eine Förderleitung entlanggeführt, mit der Flüssigbeton als Dickstoff an eine von der Mastspitze angefahrene entfernte Stelle geleitet wird. Dabei ist es in vielen Anwendungsfällen erforderlich, dass die Förderleitung den Mastarm quert. Dies kann dadurch erfolgen, dass die Förderleitung am Mastarm vorbei geführt wird, was aber konstruktiv aufwändig ist. Des Weiteren ist es bekannt, den Mastarm an seinen zwei einander gegenüberliegenden Seitenwänden mit Durchführöffnungen zu versehen und die Förderleitung durch die Durchführöffnungen hindurchzuführen. Um zu verhindern, dass Regenwasser in das Innere des Mastarms gelangt, ist durch die Durchführöffnungen ein Rohr hindurchgeführt, das die Förderleitung aufnimmt und das auf beiden Seiten des Mastarms herausstehend fest mit den Seitenwänden mittels einer Kehlnaht verschweißt ist. Die Anbringung einer Kehlnaht ist aufwändig. Aufgrund der Größe eines typischen Mastarms muss die Kehlnaht von Hand angebracht werden, was den Fertigungsaufwand erhöht.

JP S55 155866 A offenbart einen Verteilermast gemäß dem Oberbegriff des Anspruchs 1.

Ausgehend hiervon liegt der Erfindung die Aufgabe zugrunde, einen Verteilermast der eingangs angegebenen Art dahingehend weiterzuentwickeln, dass er einfacher gefertigt werden kann.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen. Anspruch 13 offenbart ein Verfahren zur Herstellung eines Verteilermasts nach einem der Ansprüche 1 bis 12. Der Erfindung liegt der Gedanke zugrunde, das Rohr nicht direkt, wie bisher mit den Seitenwänden zu verbinden, sondern an seinen Rohrenden jeweils einen Flansch anzuordnen, der über die Außenumrandung des Rohrendes rings umlaufend übersteht. Da das Rohr im Vergleich zu einem typischen Mastarm relativ klein ist, kann eine aus dem Rohr und den Flanschen bestehende Vorschweißbaugruppe automatisiert mittels eines Schweißroboters gefertigt werden. Die Vorschweißbaugruppe kann dann vor dem Zusammenfügen der Seitenwände mit den Querwänden mit seinen Flanschen an den Seitenwänden, insbesondere mit einer umlaufenden Schweißnaht befestigt werden, die den Mastarm gegen das Eindringen von Regenwasser im Bereich der Durchführöffnungen abdichtet. Eine eventuelle Schwächung, die der Mastarm aufgrund der Durchführöffnungen an den Seitenwänden erfährt, wird von der Vorschweißbaugruppe zumindest teilweise ausgeglichen, so dass der von der Förderleitung durchdrungene Mastarm ausreichend steif ist. Eine vorteilhafte Ausgestaltung der Erfindung sieht vor, dass die Flansche jeweils an der der anderen Seitenwand zugewandten Innenfläche der betreffenden Seitenwand anliegen. Die die Flansche mit den Seitenwänden verbindenden Schweißnähte sind dann besonders einfach zu fertigen. Die Flansche verstärken die im Bereich der Durchtrittsöffnung geschwächten Seitenwände zusätzlich.

Eine weitere bevorzugte Ausgestaltung der Erfindung sieht vor, dass mindestens einer der Flansche einen umlaufenden Absatz aufweisen, der in die betreffende Durchführöffnung hinein ragt. Der Absatz kann dann mit dem Umfangsrand der betreffenden Durchführöffnung unter Bildung eines Vollanschlusses verbunden sein, welcher dem Hohlkörper in diesem Bereich zusätzliche Stabilität verleiht. Vorteilhafterweise wird zu diesem Zweck der Umfangsrand der den Absatz aufnehmenden Durchführöffnung mit einer Fase versehen, so dass sich die Durchführöffnung zur der der Innenfläche der Seitenwand abgewandten Außenfläche hin aufweitet. Die Vollverbindung ist dann im Querschnitt V-förmig und kann besonders einfach aufgrund des zur Außenfläche hin größer werdenden Spalts zwischen dem Absatz und dem Umfangsrand der Durchführöffnung angebracht werden.

Zusätzlich ist es möglich, dass mindestens einer der Flansche mit der benachbarten Seitenwand mittels einer Kehlnaht verbunden ist. Dadurch kann an solchen Stellen, an denen keine so hohen Anforderungen an die Stabilität der Verbindung gestellt werden, durch Weglassen des Absatzes Material eingespart werden. In diesem Fall wird die Kehlnaht einfach rings umlaufend auf einem nach innen über den Umfangsrand der Durchführöffnung vorstehenden Rand des Flanschs angebracht.

Vorteilhaft weisen die Flansche jeweils eine Außenkontur mit mindestens einem geraden Abschnitt auf. Der gerade Abschnitt dient dabei der besseren Ausrichtung bezüglich der zugehörigen Seitenwand, indem er bei der Montage parallel zu einem Rand der Seitenwand angeordnet wird. Die Durchführöffnungen sind in zueinander in einer Längsrichtung parallel verlaufenden ersten Abschnitten der Seitenwände angeordnet und in der Längsrichtung gegeneinander versetzt. Typischerweise schließen sich an die ersten Abschnitte der Seitenwände an ihren beiden parallel zueinander in einer weiteren Längsrichtung verlaufende weitere Abschnitte der Seitenwände an, so dass im Mastarm eine Kröpfung ausgebildet wird, durch welche die Förderleitung hindurch geführt wird. Die weitere Längsrichtung definiert dabei eine Längserstreckung des Mastarms, in der sich auch die in diesem Falle geradlinige Förderleitung erstreckt.

Grundsätzlich ist es nach Art einer geometrischen Umkehrung auch möglich, dass die Seitenwände des Mastarms über die gesamte Längserstreckung geradlinig verlaufen und dass die Förderleitung in diesem Falle so gekröpft ist, dass sie die Seitenwände in einem mittleren Bereich schräg durchdringt.

In allen Anwendungsfällen wird gemäß der Erfindung eine Vorschweißbaugruppe vorgeschlagen, deren Rohr mit an den beiden Rohrenden angeschweißten, über die Außenumrandung des Rohrendes überstehenden Flansche versehen ist, wobei das Rohr bevorzugt die Gestalt eines in einem spitzen Winkel zu seiner Längsachse geschnittenen Zylinders aufweist.

Im Folgenden wird die Erfindung anhand eines in der Zeichnung in schematischer Weise dargestellten Ausführungsbeispiels näher erläutert. Es zeigen
- Fig. 1a, 1b: einen Mastarm mit durchgeführter Förderleitung in einer Seitenansicht und in Draufsicht;
- Fig. 2: eine aus einem Rohr und zwei Flanschen bestehende Vorschweißbaugruppe und

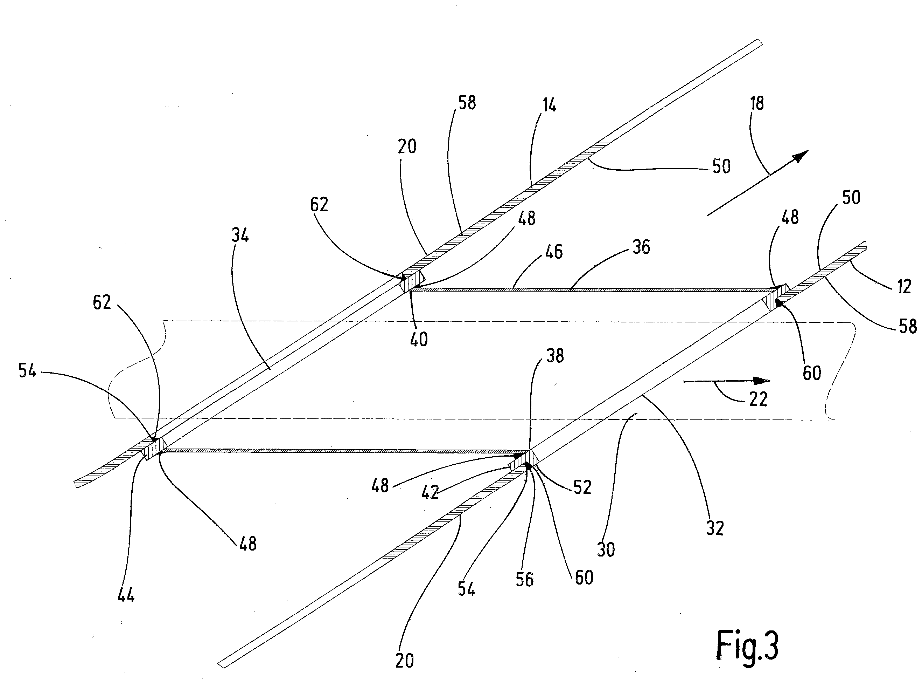

- Fig. 3: einen schematisierten Längsschnitt durch den Mastarm gemäß Fig. 1a, 1b im Bereich der Vorschweißbaugruppe.

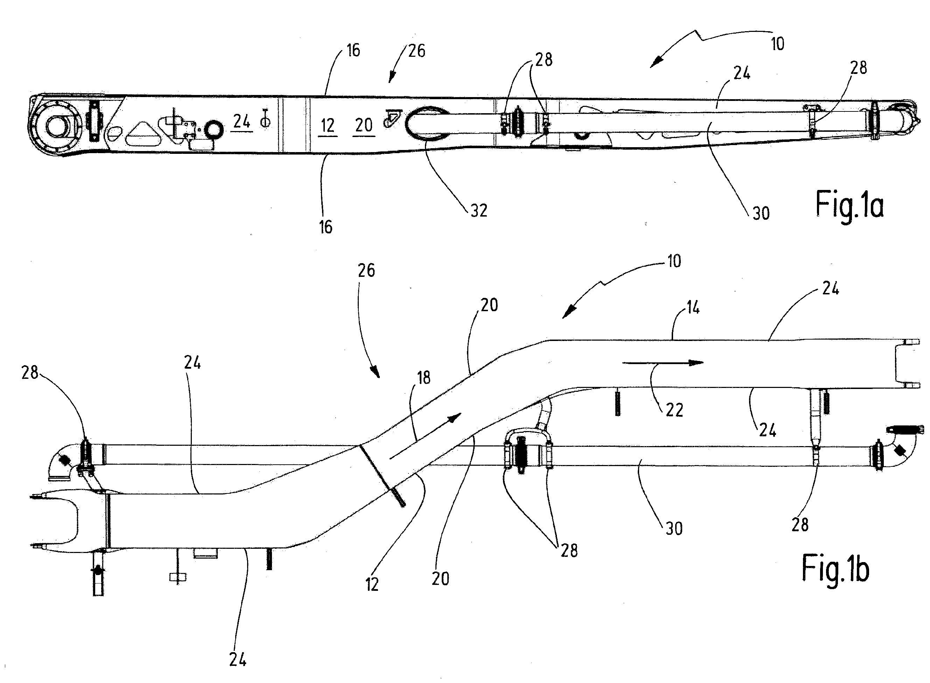

Der in Fig. 1a, b dargestellte, ein Kastenprofil aufweisende Mastarm 10, der für einen mehrarmigen Verteilermast einer stationären oder fahrbaren Betonpumpe bestimmt ist, weist zwei Seitenwände 12, 14 aus Feinkornbaustahl sowie zwei die Seitenwände 12, 14 miteinander verbindende Querwände 16 ebenfalls aus Feinkornbaustahl auf. Die Seitenwände 12, 14 weisen jeweils einen sich in einer Längsrichtung 18 erstreckenden ersten Abschnitt 20 sowie sich an den beiden Enden des ersten Abschnitts 20 anschließende, sich in einer weiteren Längsrichtung 22 erstreckende weitere Abschnitte 24 auf. Die Längsrichtung 18 und die weitere Längsrichtung 22 schließen einen spitzen Winkel ein, so dass die ersten Abschnitte 20 der Seitenwände 12, 14 eine Kröpfung 26 bilden. Am Mastarm 10 ist mittels Rohrschellen 28 eine geradlinige Betonförderleitung 30 befestigt, die sich in der weiteren Längsrichtung 22 erstreckt. Im Bereich der Kröpfung 26 durchdringt die Förderleitung 30 den Mastarm 10. Zu diesem Zweck weist jede der Seitenwände 12, 14 eine Durchführöffnung 32, 34 auf, welche in der Längsrichtung 18 gegeneinander versetzt angeordnet sind.

Die Förderleitung 30 ist durch ein in der Kröpfung 26 angeordnetes Rohr 36 geführt, dessen Rohrenden 38, 40 in die Durchführöffnungen 32, 34 münden. Das Rohr kann aus einem herkömmlichen Baustahl bestehen. An jedem der Rohrenden 38, 40 ist ein Flansch 42, 44 angeschweißt, welcher jeweils über die Rohraußenfläche 46 im Bereich des Rohrendes 38, 40, also über dessen Außenumrandung rings umlaufend übersteht. Die Flansche 42, 44 sind mittels Kehlnähten 48 mit dem Rohr 36 verbunden und liegen jeweils flächig an einer Innenfläche 50 der zugehörigen Seitenwand 12, 14 an. Ein erster der beiden Flansche 42, der zwischen einem ersten der beiden Rohrenden 38 und einer ersten der beiden Seitenwände 12 angeordnet ist, weist zusätzlich einen in eine erste der beiden Durchführöffnungen 32 ragenden Absatz 52 auf. Die erste Durchführöffnung 32 weist an ihrem Umfangsrand 54 zudem eine Fase 56 auf, so dass sie sich zu der der Innenfläche 50 der ersten Seitenwand 12 abgewandten Außenfläche 58 hin aufweitet. Im Bereich zwischen dem Absatz 52 und dem Umfangsrand 54 ist eine als Vollanschluss 60 ausgebildete Schweißnaht angeordnet. Der Vollanschluss 60 stabilisiert den ersten Abschnitt 20 der ersten Seitenwand 12, was insbesondere deshalb von Vorteil ist, als dieser der Mastspitze zugewandt ist, in deren Bereich höhere Torsionskräfte wirken. Am gegenüberliegenden Ende des Rohrs 36 ist der mit dem zweiten Rohrende 40 verbundene zweite Flansch 44 ohne einen in die zweite Durchführöffnung 34 ragenden Absatz ausgebildet und mit dem Umfangsrand 54 der zweiten Durchführöffnung 34 über eine als Kehlnaht 62 ausgebildete rings umlaufende Schweißnaht verbunden.

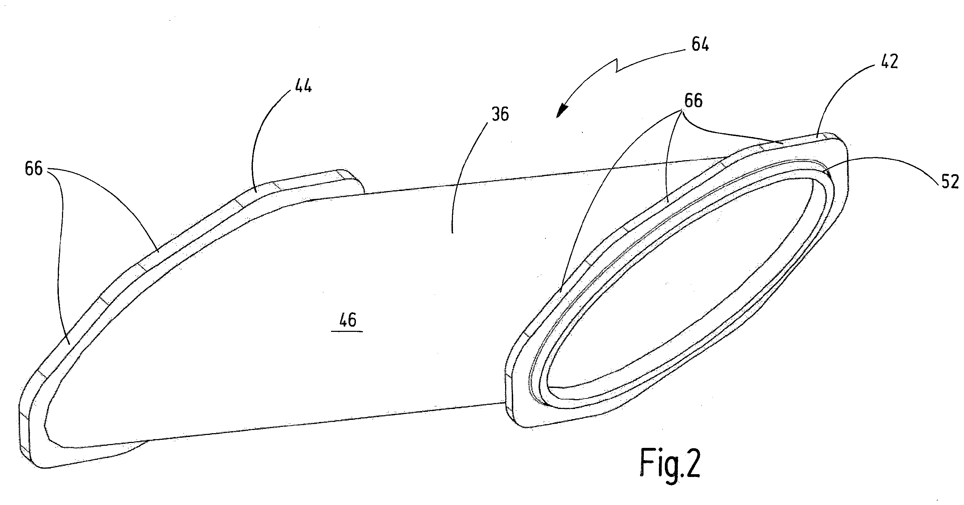

Bei der Herstellung des Mastarms wird zunächst eine aus dem Rohr 36 und den Flanschen 42, 44 gebildete Vorschweißbaugruppe 64 (Fig. 2) hergestellt. Das zylinderförmige Rohr 36 wird dabei in zueinander parallelen Ebenen abgelängt, die mit der Zylindermittelachse einen spitzen Winkel einschließen, der dem spitzen Winkel zwischen den ersten Abschnitten 20 der Seitenwände 12, 14 und den weiteren Abschnitten 24 entspricht. Sodann werden die Flansche 42, 44 an den Rohrenden 38, 40 angeschweißt. Diese weisen jeweils den Umriss eines Vielecks mit abgerundeten Ecken auf, so dass ihr Umriss mehrere gerade Abschnitte 66 aufweist, die eine Positionierung an der jeweiligen Durchführöffnung 32, 34 erleichtern, indem sie parallel zu einer Kante der jeweiligen Seitenwand 12, 14 ausgerichtet werden können. Die fertige Vorschweißbaugruppe 64 wird mit den Seitenwänden 12, 14 verbunden, bevor das Kastenprofil des Mastarms im Bereich der Kröpfung 26 vollumfänglich geschlossen wird.

### Bezugszeichenliste

- 10: Mastarm
- 12, 14: Seitenwände
- 16: Querwände
- 18: Längsrichtung
- 20: erster Abschnitt
- 22: weitere Längsrichtung
- 24: weitere Abschnitte
- 26: Kröpfung
- 28: Rohrschelle
- 30: Förderleitung
- 32, 34: Durchführöffnungen
- 36: Rohr
- 38,40: Rohrenden
- 42, 44: Flansche
- 46: Rohraußenfläche
- 48, 62: Kehlnaht
- 50: Innenfläche
- 52: Absatz
- 54: Umfangsrand
- 56: Fase
- 58: Außenfläche
- 60: Vollanschluss
- 64: Vorschweißbaugruppe
- 66: gerade Abschnitte

## Patentansprüche

1. Verteilermast für stationäre oder fahrbare Dickstoffpumpen mit mindestens einem ein Kastenprofil aufweisenden Mastarm (10), welcher zwei im Abstand zueinander angeordnete Seitenwände (12, 14) aufweist, die mittels zweier im Abstand zueinander angeordneter Querwände (16) miteinander verbunden sind, und mit einer entlang dem mindestens einen Mastarm (10) geführten und an diesem befestigten Förderleitung (30), wobei jede Seitenwand (12, 14) des Mastarms eine Durchführöffnung (32, 34) für die Förderleitung (30) aufweist, wobei die Durchführöffnungen (32, 34) in zueinander in Längsrichtung (18) parallel verlaufenden ersten Abschnitten (20) der Seitenwände (12, 14) angeordnet sind, wobei zwischen den Seitenwänden (12, 14) ein mit diesen fest verbundenes, mit seinen Rohrenden (38, 40) in die Durchführöffnungen (32, 34) mündendes Rohr (36) verläuft, wobei zwischen den Rohrenden (38, 40) und der benachbarten Seitenwand (12, 14) jeweils ein Flansch (42, 44) angeordnet ist, der über eine Außenumrandung des Rohrendes (38, 40) rings umlaufend übersteht,
**dadurch gekennzeichnet,**
**dass** die Durchführöffnungen (32, 34) in der Längsrichtung (18) der parallel verlaufenden ersten Abschnitten (20) der Seitenwände (12, 14) gegeneinander versetzt sind,
und **dass** jeder Flansch (42, 44)
sowohl am Rohrende (38, 40) als auch an der benachbarten Seitenwand (12, 14) angeschweißt ist.

2. Verteilermast nach Anspruch 1, **dadurch gekennzeichnet, dass** die Flansche (42, 44) jeweils sowohl mit den Rohrenden (38, 40) als auch mit der benachbarten Seitenwand (12, 14) mittels einer umlaufenden Schweißnaht verbunden sind.

3. Verteilermast nach Anspruch 1 oder 2, **dadurch gekennzeichnet, dass** die Flansche (42, 44) jeweils an der der jeweils anderen Seitenwand (12, 14) zugewandten Innenfläche (50) der benachbarten Seitenwand (12, 14) anliegen.

4. Verteilermast nach einem der vorangehenden Ansprüche, **dadurch gekennzeichnet, dass** mindestens einer der Flansche (42, 44) einen umlaufenden Absatz (52) aufweist, der in die betreffende Durchführöffnung (32) hinein ragt.

5. Verteilermast nach Anspruch 4, **dadurch gekennzeichnet, dass** der Absatz (52) mit dem Umfangsrand (54) der betreffenden Durchführöffnung (32) unter Bildung eines Vollanschlusses (60) verschweißt ist.

6. Verteilermast nach Anspruch 5, **dadurch gekennzeichnet, dass** der Umfangsrand (54) der den Absatz (52) aufnehmenden Durchführöffnung (32) mit einer Fase (56) versehen ist, so dass sich die Durchführöffnung (32) zu der der Innenfläche (50) abgewandten Außenfläche (58) hin aufweitet.

7. Verteilermast nach einem der vorangehenden Ansprüche, **dadurch gekennzeichnet, dass** mindestens einer der Flansche (42, 44) mit der betreffenden Seitenwand (14) unter Bildung einer Kehlnaht (62) verschweißt ist.

8. Verteilermast nach einem der vorangehenden Ansprüche, **dadurch gekennzeichnet, dass** die Flansche (42, 44) jeweils eine Außenkontur mit mindestens einem geraden Abschnitt (66) aufweisen.

9. Verteilermast nach einem der vorangehenden Ansprüche" **dadurch gekennzeichnet, dass** sich an die ersten Abschnitte (20) der Seitenwände (12, 14) an ihren beiden Enden parallel zueinander in einer weiteren Längsrichtung (22) verlaufende weitere Abschnitte (24) der Seitenwände (12, 14) anschließen.

10. Verteilermast nach einem der vorangehenden Ansprüche, **dadurch gekennzeichnet, dass** die Förderleitung berührungslos durch das Rohr (36) hindurch geführt ist.

11. Verteilermast nach Anspruch 9, **dadurch gekennzeichnet, dass** sich die vorzugsweise geradlinige Förderleitung (30) in der weiteren Längsrichtung (22) erstreckt.

12. Verteilermast nach einem der vorangehenden Ansprüche, **dadurch gekennzeichnet, dass** das Rohr (36) die Form eines in einem spitzen Winkel zu einer Längsachse geschnittenen Zylinders aufweist.

13. Verfahren zur Herstellung eines Verteilermasts nach einem der Ansprüche 1 bis 12, wobei aus einem Rohr (36) und zwei Flanschen (42, 44) durch Anschweißen jeweils eines Flanschs (42, 44) an jedes Rohrende (38, 40) eine Vorschweißbaugruppe (64) hergestellt wird und wobei die Vorschweißbaugruppe (64) vor dem Zusammenfügen der Seitenwände (12, 14) und der Querwände (16) mit den Seitenwänden (12, 14) verschweißt wird.

## Claims

1. A distribution boom for stationary or mobile viscous material pumps, comprising at least one boom arm (10) having a box profile, which boom arm has two spaced apart side walls (12, 14) connected to each other by means of two spaced apart transverse walls (16), and comprising a conveying line (30), which is guided along the at least one boom arm (10) and is fastened thereto, wherein each side wall (12, 14) of the boom arm has a lead-through opening (32, 34) for the conveying line (30), wherein the lead-through openings (32, 34) are disposed in first portions (20) of the side walls (12, 14), which first portions run parallel to one another in longitudinal direction (18), wherein between the side walls (12, 14) runs a tube (36), which is fixedly connected to these and opens out with its tube ends (38, 40) into the lead-through openings (32, 34), wherein between the tube ends (38, 40) and the adjacent side wall (12, 14) is respectively disposed a flange (42, 44), which projects in full circle over an outer border of the tube end (38, 40), **characterized in that** the lead-through openings (32, 34) are mutually offset in the longitudinal direction (18) of the first portions (20) of the side walls (12, 14), which run parallel to one another, and that each flange (42, 44) is welded both to the tube end (38, 40) and to the adjacent side wall (12, 14).

2. The distribution boom as claimed in claim 1, **characterized in that** the flanges (42, 44) are respectively connected both to the tube ends (38, 40) and to the adjacent side wall (12, 14) by means of a circumferential weld seam.

3. The distribution boom as claimed in claim 1 or 2, **characterized in that** the flanges (42, 44) respectively bear against an inner surface (50) of the adjacent side wall (12, 14) which faces the respectively other side wall (12, 14).

4. The distribution boom as claimed in one of the preceding claims, **characterized in that** at least one of the flanges (42, 44) has a circumferential lip (52), which juts into the particular lead-through opening (32).

5. The distribution boom as claimed in claim 4, **characterized in that** the lip (52) is welded to the peripheral rim (54) of the particular lead-through opening (32), with the formation of a full connection (60).

6. The distribution boom as claimed in claim 5, **characterized in that** the peripheral rim (54) of the lead-through opening (32) receiving the lip (52) is provided with a bevel (56), so that the lead-through opening (32) widens in the direction of the outer surface (58) facing away from the inner surface (50).

7. The distribution boom as claimed in one of the preceding claims, **characterized in that** at least one of the flanges (42, 44) is welded to the particular side wall (14) with the formation of a fillet weld (62).

8. The distribution boom as claimed in one of the preceding claims, **characterized in that** the flanges (42, 44) respectively have an outer contour having at least one straight portion (66).

9. The distribution boom as claimed in one of the preceding claims, **characterized in that** the first portions (20) of the side walls (12, 14) are adjoined by further portions (24) of the side walls (12, 14), which further portions at their two ends run parallel to each other in a further longitudinal direction (22).

10. The distribution boom as claimed in one of the preceding claims, **characterized in that** the conveying line is guided contactlessly through the tube (36).

11. The distribution boom as claimed in claim 9, **characterized in that** the preferably rectilinear conveying line (30) extends in the further longitudinal direction (22).

12. The distribution boom as claimed in one of the preceding claims, **characterized in that** the tube (36) has the form of a cylinder cut at an acute angle to a longitudinal axis.

13. A method for manufacturing a distribution boom as claimed in one of claims 1 to 12, wherein out of a tube (36) and two flanges (42, 44), by welding respectively of a flange (42, 44) to each tube end (38, 40), is produced a prewelded assembly (64), and wherein the prewelded assembly (64), prior to the joining together of the side walls (12, 14) and the transverse walls (16), is welded to the side walls (12, 14).

## Revendications

1. Mât distributeur pour des pompes à matières épaisses, fixes ou mobiles, muni d'au moins un bras de mât (10) présentant un profil en caisson, qui présente deux parois latérales (12, 14) agencées avec un écart l'une par rapport à l'autre, qui sont reliées l'une à l'autre au moyen de deux parois transversales (16) agencées avec un écart l'une par rapport à l'autre, et muni d'un conduit de refoulement (30) guidé le long du au moins un bras de mât (10) et fixé à celui-ci, dans lequel chaque paroi latérale (12, 14) du bras de mât présente une ouverture traversante (32, 34) destinée au conduit de refoulement (30), dans lequel les ouvertures traversantes (32, 34) sont agencées dans des premières sections (20), parallèles l'une par rapport à l'autre dans une direction longitudinale (18), des parois latérales (12, 14), dans lequel un tube (36), relié fixe aux parois latérales (12, 14) et dont les extrémités de tube (38, 40) débouchent dans les ouvertures traversantes (32, 34), passe entre lesdites parois latérales (12, 14) dans lequel une bride (42, 44) est respectivement agencée entre les extrémités de tube (38, 40) et la paroi latérale (12, 14) adjacente, ladite bride faisant saillie de manière circulaire autour du dessus d'un bord extérieur de l'extrémité de tube (38, 40),
**caractérisé en ce que,**
les ouvertures traversantes (32, 34) sont décalées l'une par rapport à l'autre dans la direction longitudinale (18) des premières sections (20), parallèles, des parois latérales (12, 14),
et chaque bride (42, 44)
est soudée aussi bien au niveau de l'extrémité de tube (38, 40) qu'au niveau de la paroi latérale (12, 14) adjacente.

2. Mât distributeur selon la revendication 1, **caractérisé en ce que** les brides (42, 44) sont reliées respectivement aussi bien aux extrémités de tube (38, 40) qu'à la paroi latérale (12, 14) adjacente au moyen d'une soudure circulaire.

3. Mât distributeur selon la revendication 1 ou 2, **caractérisé en ce que** les brides (42, 44) reposent respectivement sur la surface intérieure (50), tournée vers l'autre paroi latérale (12, 14) respective, de la paroi latérale (12, 14) adjacente.

4. Mât distributeur selon l'une quelconque des revendications précédentes, **caractérisé en ce qu'**au moins une des brides (42, 44) présente un collet circulaire (52) qui fait saillie dans l'ouverture traversante (32) concernée.

5. Mât distributeur selon la revendication 4, **caractérisé en ce que** le collet (52) est soudé au bord périphérique (54) de l'ouverture traversante (32) concernée avec formation d'un raccord plein (60).

6. Mât distributeur selon la revendication 5, **caractérisé en ce que** le bord périphérique (54) de l'ouverture traversante (32) accueillant le collet (52) est muni d'un biseau (56), de sorte que l'ouverture traversante (32) s'élargit vers la surface extérieure (58) détournée de la surface intérieure (50).

7. Mât distributeur selon l'une quelconque des revendications précédentes, **caractérisé en ce qu'**au moins une des brides (42, 44) est soudée à la paroi latérale (14) concernée avec formation d'une soudure en biseau recouverte (62).

8. Mât distributeur selon l'une quelconque des revendications précédentes, **caractérisé en ce que** les brides (42, 44) présentent respectivement un contour extérieur muni d'au moins une section droite (66).

9. Mât distributeur selon l'une quelconque des revendications précédentes, **caractérisé en ce que** d'autres sections (24), parallèles l'une par rapport à l'autre dans une autre direction longitudinale (22), des parois latérales (12, 14) se raccordent aux premières sections (20) des parois latérales (12, 14) au niveau de leurs deux extrémités.

10. Mât distributeur selon l'une quelconque des revendications précédentes, **caractérisé en ce que** le conduit de refoulement est guidé sans contact par et à travers le tube (36).

11. Mât distributeur selon la revendication 9, **caractérisé en ce que** le conduit de refoulement (30) préférablement rectiligne s'étend dans l'autre direction longitudinale (22).

12. Mât distributeur selon l'une quelconque des revendications précédentes, **caractérisé en ce que** le tube (36) a la forme d'un cylindre coupé selon un angle aigu par rapport à un axe longitudinal.

13. Procédé de fabrication d'un mât distributeur selon l'une quelconque des revendications 1 à 12, dans lequel un élément pré-soudé (64) est fabriqué à partir d'un tube (36) et de deux brides (42, 44) par soudage de respectivement une bride (42, 44) à chaque extrémité de tube (38, 40) et dans lequel l'élément pré-soudé (64) est soudé aux parois latérales (12, 14) avant la réunion des parois latérales (12, 14) et des parois transversales (16).
